# EUROPÄISCHE PATENTSCHRIFT

(11) **EP 3 017 279 B1**
(45) Veröffentlichungstag und Bekanntmachung des Hinweises auf die Patenterteilung: **07.06.2017**
(21) Anmeldenummer: 14732189.7
(22) Anmeldetag: 23.06.2014
(51) Int. Cl.: G01D 21/02, G08B 13/08, G08B 13/16

(54) **VORRICHTUNG UND VERFAHREN ZUM ERMITTELN EINES SCHLIESSZUSTANDS EINER HAUSTÜR ODER EINES HAUSFENSTERS**
DEVICE AND METHOD FOR DETERMINING THE CLOSING STATUS OF A DOOR OR A WINDOW
DISPOSITIF ET PROCÉDÉ DE DÉTERMINATION DE L'ÉTAT DE FERMETURE D'UNE PORTE OU D'UNE FENÊTRE

(30) Priorität: 04.07.2013 DE 102013213104
(43) Veröffentlichungstag der Anmeldung: 11.05.2016
(73) Patentinhaber: Robert Bosch GmbH, 70442 Stuttgart (DE)
(72) Erfinder: BARTHOLOMEYCZIK, Julian, 72762 Reutlingen (DE); SCHINDLER, Frank, 72762 Reutlingen (DE); NJIKAM MOFEN, James, 72762 Reutlingen (DE); SCHEIERMANN, Sergej, 70565 Stuttgart (DE)
(86) Internationale Anmeldenummer: PCT/EP2014/063154
(87) Internationale Veröffentlichungsnummer: WO 2015/000731

(56) Entgegenhaltungen:
- WO-A1-2012/096647
- US-A1- 2005 030 179

## Beschreibung

Die Erfindung betrifft eine Vorrichtung und ein Verfahren zum Ermitteln eines Schließzustands einer Haustür oder eines Hausfensters.

### Stand der Technik

Im Stand der Technik sind diverse Vorrichtungen bekannt.

Die DE 10 2004 053 522 A1 beschreibt eine Überwachungsvorrichtung für Transportgüter mit einem Träger, über welchen die Überwachungsvorrichtung fixierbar ist. Ferner umfasst die dort beschriebene Überwachungsvorrichtung signalabgebende und/oder signalempfangende Komponenten, welche an dem Träger angeordnet sind, und Verbindungsleitungen zwischen den Komponenten, welche an dem Träger angeordnet sind.

Die DE 10 2005 001 582 A1 beschreibt eine Einrichtung und ein Verfahren zur Registrierung des Öffnens von Verschlüssen von zu sichernden Räumen mit einem Versiegelungsmodul, das einen Sensor, einen Mikroprozessor, einen Speicher und eine Vorrichtung zur drahtlosen Kommunikation enthält, welches derart an den Verschluss anbringbar ist, dass der Sensor eine Bewegung erkennt.

Ferner umfasst die dort beschriebene Einrichtung eine Erfassungseinrichtung und mindestens eine Vorrichtung zur drahtlosen Kommunikation, einen Mikroprozessor und einen Speicher.

Die vorliegende Erfindung schafft ein Verfahren zum Ermitteln eines Schließzustands einer Haustür oder eines Hausfensters mit den Merkmalen des Patentanspruchs 1 und eine Vorrichtung zum Ermitteln eines Schließzustands einer Haustür oder eines Hausfensters gemäß Patentanspruch 6.

Die Offenlegungsschrift US 2005/030179 A1 offenbart eine Vorrichtung und ein Verfahren zum Ermitteln eines Schließzustands einer Haustür. Hierzu werden mit einem Beschleunigungssensor die Radialbeschleunigung und die Tangentialbeschleunigung erfasst. Falls bei einer Bewegung der Tür der Verlauf der Radialbeschleunigung in der Zeitspanne vor dem Überschreiten der Tangentialbeschleunigung über einen vorbestimmen Schwellenwert von Null verschieden ist, wird ein normales Schließen der Tür ermittelt. Einen ähnlichen Ansatz verfolgt die Offenlegungsschrift WO 2012/096647 A1.

### Vorteile der Erfindung

Kern der Erfindung ist es, ein vorteilhaftes Verfahren zum Ermitteln des geschlossenen Türzustands einer Haustür oder eines Hausfensters mittels Evaluierung der Beschleunigungsdaten und Drehratensensordaten bereitzustellen, um einen Schließvorgang der Haustür oder des Hausfensters in zuverlässiger Weise zu erkennen.

Der Türzustand der Haustür wird als geschlossen detektiert, wenn etwa der berechnete Öffnungswinkel der Haustür kleiner ist als ein vordefinierter Winkelschwellwert. Der Schließzustand der Haustür oder des Hausfensters kann dabei graduell in Form eines Öffnungswinkels der Haustür oder einer Fensterstellung des Hausfensters oder nicht graduell in der Form "Haustür offen" und "Haustür geschlossen" bzw. "Hausfenster offen" und "Hausfenster geschlossen" ermittelt werden.

Außerdem kann durch die vorliegende Erfindung eine automatische Kalibrierung des Öffnungswinkels der Haustür oder des Hausfensters vorgenommen werden und daher können Sensoren mit einfacherem Aufbau für die Türzustandserkennung eingesetzt werden und der Einfluss von Messwertschwankungen und Toleranzbereichen der eingesetzten Sensoren auf die Zuverlässigkeit des Systems für die Türzustandserkennung wird minimiert.

Vorteilhafte Ausführungsformen und Weiterbildungen ergeben sich aus den Unteransprüchen sowie aus der Beschreibung unter Bezugnahme auf die Figuren.

Gemäß einer Ausführungsform der Erfindung ist vorgesehen, dass während der ersten und/oder der zweiten Zeitspanne ein fortgesetztes Erfassen der Drehrate der Haustür oder des Hausfensters mit Hilfe von der ersten Erfassungseinrichtung erfolgt und ein Berechnen eines Öffnungswinkels der Haustür oder des Hausfensters anhand der erfassten Drehrate vorgenommen wird und ein Ermitteln erfolgt, ob der berechnete Öffnungswinkel den vorbestimmten Winkelschwellwert unterschreitet. Dadurch kann vorteilhaft eine sichere Erkennung des geschlossenen Zustandes der Haustür oder des Hausfensters gewährleistet werden.

Gemäß einer weiteren Ausführungsform der Erfindung ist vorgesehen, dass nach einem Ermitteln eines Schließens der Haustür oder des Hausfensters der Winkelschwellwert kalibriert wird. Dies erlaubt vorteilhaft, einen Integrationsfehler der ersten Erfassungseinrichtung zu minimieren.

Gemäß einer weiteren Ausführungsform der Erfindung ist vorgesehen, dass als die vorbestimmte erste Zeitspanne eine Zeitspanne von bis zu 3 s oder von bis zu 1,5 s oder von bis zu 0,1 s verwendet wird. Dies erlaubt vorteilhaft, eine Erschütterung der Haustür innerhalb der ersten Zeitspanne zu erfassen.

Gemäß einer weiteren Ausführungsform der Erfindung ist vorgesehen, dass als die vorbestimmte zweite Zeitspanne eine Zeitspanne von bis zu 20 s oder von bis zu 10 s oder von bis zu 5 s verwendet wird. Dies erlaubt vorteilhaft, einen geschlossenen Zustand der Haustür innerhalb der zweiten Zeitspanne zu erfassen.

Gemäß einer weiteren Ausführungsform der Erfindung ist vorgesehen, dass die erste Erfassungseinrichtung als ein Drehraten-Sensor zum Erfassen von Daten bezüglich einer aktuell vorherrschenden Drehrate der Haustür ausgebildet ist. Dadurch kann mit einem einfachen Drehraten-Sensor vorteilhaft eine Position der Haustür ermittelt werden.

Gemäß einer weiteren Ausführungsform der Erfindung ist vorgesehen, dass die zweite Erfassungseinrichtung als ein Erschütterungssensor zum Erfassen von mechanischen Schwingungen der Haustür ausgebildet ist. Dies erlaubt vorteilhaft, ein Zuschlagen der Haustür sicher zu erkennen.

Gemäß einer weiteren Ausführungsform der Erfindung ist vorgesehen, dass die Rechnereinrichtung dazu ausgelegt ist, die erfassten Drehraten zeitlich zu integrieren, um den Türöffnungswinkel der Haustür zu berechnen. Dies erlaubt vorteilhaft, kompakte Drehraten- und/oder Beschleunigungssensoren einzusetzen.

Gemäß einer weiteren Ausführungsform der Erfindung ist vorgesehen, dass die Überwachungseinrichtung dazu ausgelegt ist, den Schließzustand der Haustür anhand eines Unterschreitens eines vorbestimmten Erschütterungsratenschwellwerts für eine vorbestimmte erste Zeitspanne zu ermitteln.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: eine schematische Darstellung eines Flussdiagramms eines Verfahrens zum Ermitteln eines Schließzustands einer Haustür oder eines Hausfensters gemäß einer Ausführungsform der Erfindung;
- Fig. 2: eine schematische Darstellung einer Vorrichtung zum Ermitteln eines Schließzustands einer Haustür oder eines Hausfensters gemäß einer weiteren Ausführungsform der Erfindung;
- Fig. 3: eine schematische Darstellung einer Haustür zur Erläuterung der Erfindung; und
- Fig. 4: eine schematische Darstellung eines Flussdiagramms eines Verfahrens zum Ermitteln eines Schließzustands einer Haustür oder eines Hausfensters gemäß einer noch weiteren Ausführungsform der Erfindung.

In den Figuren der Zeichnung bezeichnen gleiche Bezugszeichen gleiche oder funktionsgleiche Elemente, Bauteile, Komponenten oder Verfahrensschritte, soweit nichts Gegenteiliges angegeben ist.

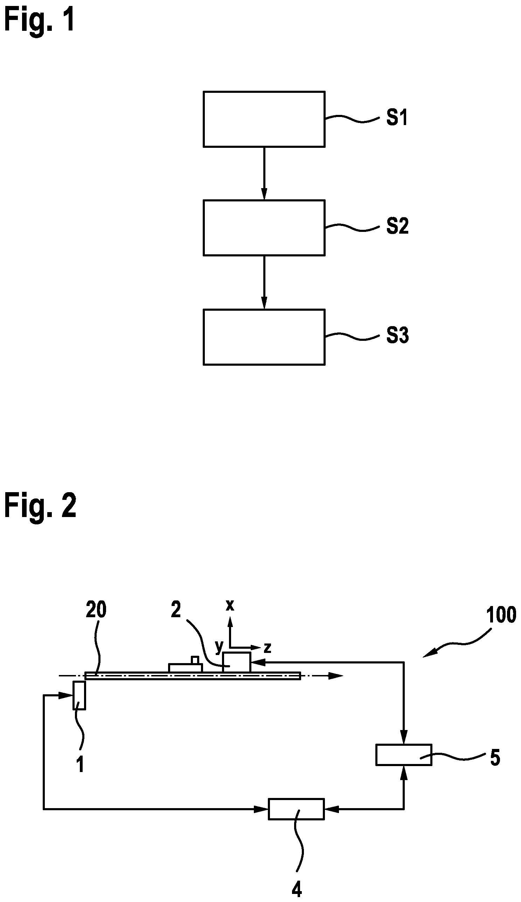

Die Figur 1 zeigt eine schematische Darstellung eines Flussdiagramms eines Verfahrens zum Ermitteln eines Schließzustands einer Haustür oder eines Hausfensters gemäß einer weiteren Ausführungsform der Erfindung.

Als ein erster Verfahrensschritt erfolgt ein Erfassen S1 einer Drehrate der Haustür 10 oder des Hausfensters 20 mit Hilfe von einer ersten Erfassungseinrichtung 1 und ein

Berechnen eines Öffnungswinkels der Haustür 10 oder des Hausfensters 20 anhand der erfassten Drehrate und ein Ermitteln, ob der berechnete Öffnungswinkel der Haustür 10 oder des Hausfensters 20 einen vorbestimmten Winkelschwellwert unterschreitet.

Als ein zweiter Verfahrensschritt erfolgt ein Erfassen S2 einer Erschütterungsrate der Haustür 10 oder des Hausfensters 20 mit Hilfe von einer zweiten Erfassungseinrichtung 2 und Ermitteln, ob von der Erschütterungsrate ein vorbestimmter Erschütterungsratenschwellwert innerhalb einer vorbestimmten ersten Zeitspanne überschritten wird.

Damit kann vorteilhaft die mit einer Schließung der Haustür 10 verbundene Erschütterung der Haustür 10 erfasst werden

Als ein dritter Verfahrensschritt erfolgt ein Ermitteln S3, ob von der erfassten Drehrate ein vorbestimmter Drehratenschwellwert innerhalb einer vorbestimmten zweiten Zeitspanne seit dem Überschreiten des Erschütterungsratenschwellwertes überschritten wird.

Ferner kann hierbei auch eine Änderung des Öffnungswinkels der Haustür 10 oder des Hausfensters 20 im Anschluss an eine erfasste Erschütterung, d. h. innerhalb einer vorbestimmten Zeitspanne, ermittelt werden. Dies erlaubt vorteilhaft, eine durch ein Klopfen an der Haustür 10 verursachte Erschütterung von einer durch ein Zuschlagen der Haustür 10 verursache Erschütterung zu unterscheiden, da nach einem Anklopfen an der Haustür keine Änderung des Öffnungswinkels der Haustür 10 erfolgt.

Dabei können sich die vorbestimmte erste Zeitspanne und die vorbestimmte zweite Zeitspanne zumindest teilweise überlappen.

Das Verfahren zum Ermitteln eines Schließzustands einer Haustür oder eines Hausfensters kann auch als ein Prüfen auf ein Vorliegen der folgenden Bedingungen (a)-(d) ausgebildet werden:
(a) Erfassen einer Drehrate einer Haustür 10, wobei ein Drehratensensor in einem zweiten Verfahrensschritt erkennt, dass die Tür geöffnet wurde und gerade geschlossen wird.
(b) Der Türöffnungswinkel kleiner als die vordefinierte Schwelle ist.
(c) Der Beschleunigungssensor den Schließvorgang detektiert durch hochfrequente Änderungen im Beschleunigungssignal, die beispielsweise beim Schließvorgang oder einem Aufprallen der Haustür 10 entstehen
(d) Ferner der Öffnungswinkel der Haustür 10 anhand der Signale des Drehratensensors für eine vordefinierte Zeit als stabil erkannt werden.

Dabei kann das Vorliegen einer vorbestimmten Mindestanzahl oder aller Bedingungen (a)-(d) verlangt werden. Und das Vorliegen iterativ geprüft werden.

Die Figur 2 zeigt eine Vorrichtung zum Ermitteln eines Schließzustands einer Haustür oder eines Hausfensters gemäß einer Ausführungsform der Erfindung gemäß einer Ausführungsform der Erfindung.

Die Vorrichtung 100 zum Ermitteln eines Schließzustands einer Haustür 10 oder eines Hausfensters 20 umfasst beispielsweise eine erste Erfassungseinrichtung 1, eine zweite Erfassungseinrichtung 2, eine Rechnereinrichtung 4 und eine Überwachungseinrichtung 5.

Die Vorrichtung 100 kann Teil eines Systems im Wohnbereich sein, bei denen Geräte eingesetzt werden, die aufgrund einer Datenvernetzung und Fernsteuerbarkeit zusätzliche Funktionen bieten, auf Englisch "eHome", "Smart House", "Smart Home", "Smart Living" und auf Deutsch "Elektronisches Haus", "Vernetztes Haus" oder "Intelligentes Haus". Dabei kann die Vernetzung mit Hilfe von Bussystemen (per Kabel, Powerline oder Funk) oder durch direkte Funkanbindung erreicht.

Die erste Erfassungseinrichtung 1 ist beispielsweise dazu ausgelegt, eine Drehrate der Haustür 10 oder des Hausfensters 20 zu erfassen. Beispielsweise ist die erfasste Drehrate eine Drehrate einer Schwenkachse der Haustür 10. Dazu ist die erste Erfassungseinrichtung 1 in oder an einem Türschwenklager der Haustür 10 oder an einem Elektromotor eines elektrischen Fensterhebers des Hausfensters 20 angeordnet.

Die zweite Erfassungseinrichtung 2 kann dazu ausgelegt sein, eine Erschütterungsrate der Haustür 10 oder des Hausfensters 20 zu erfassen. Beispielsweise kann eine Erschütterungsrate der Haustür 10 oder des Hausfensters 20 bei bis zu 20 g/s bei einer Frequenz der mechanischen Schwingungen der Haustür 10 oder des Hausfensters 20 von mehr als 1 kHz für eine Dauer von weniger als 0,5 s liegen. Die zweite Erfassungseinrichtung 2 kann beispielsweise in oder neben der Haustür 10 oder in einer Fensterbefestigung des Hausfensters 20 angeordnet werden.

Die Rechnereinrichtung 4 ist mit der ersten Erfassungseinrichtung 1 gekoppelt und dazu ausgelegt, einen Öffnungswinkel anhand der erfassten Drehrate zu berechnen. Dies kann auf dem Wege eines Aufaddierens der fortlaufend erfassen Drehraten erfolgen. Wenn der Anfangswinkel der Haustür 10 oder des Hausfensters 20 bekannt ist, ermöglicht die kontinuierliche Messung der Drehrate eine Positionsbestimmung zu jedem Zeitpunkt. Die Position oder der Öffnungswinkel der Haustür 10 oder der Öffnungsgrad des Hausfensters 20 in der Fensterführung lässt sich daraus einfach durch Integration über die Zeit von der Rechnereinrichtung 4 bestimmen

Die Überwachungseinrichtung 5 kann dazu ausgelegt sein, den Schließzustand der Haustür 10 oder des Hausfensters 20 anhand eines Vergleichens des berechneten Öffnungswinkels mit einem vorbestimmten Winkelschwellwert und anhand eines Vergleichens der Erschütterungsrate mit einem Erschütterungsratenschwellwert zu ermitteln. Beispielsweise kann für den Öffnungswinkel der Haustür 10 oder des Hausfensters 20 ein vorbestimmter Winkelschwellwert von 5° oder von 1° vorgegeben werden.

Die erste Erfassungseinrichtung 1 kann als ein Drehraten-Sensor zum Erfassen von Daten bezüglich einer aktuell vorherrschenden Drehrate der Haustür 10 ausgebildet sein. Die als Drehraten-Sensor ausgebildete erste Erfassungseinrichtung kann die Rotationsgeschwindigkeit oder die Winkelgeschwindigkeit entlang einer Schwenkachse der Haustür 10 messen. Durch Integration lässt sich daraus ableiten, um welchen Winkel sich die Haustür innerhalb einer Zeitspanne gedreht hat.

Die zweite Erfassungseinrichtung 2 kann als ein Erschütterungssensor zum Erfassen von mechanischen Schwingungen der Haustür ausgebildet sein. Die zweite Erfassungseinrichtung 2 kann eine Piezokeramik umfassen, die durch eine so genannte seismische Masse vorgespannt ist.

Durch die mechanischen Vibrationen schlägt die Masse, ähnlich einem Hammer in einem elektrischen Feuerzeug, auf die Piezokeramik. Die Piezokeramik gibt dadurch eine Ladung ab, die durch einen entsprechenden Ladungsverstärker in ein Spannungssignal umgewandelt werden kann. Dadurch kann die zweite Erfassungseinrichtung 2 die mechanischen Schwingungen der Haustür 10 erfassen.

Ferner kann die Rechnereinrichtung 4 dazu ausgelegt sein, die erfasste Drehrate zeitlich zu integrieren, um den Türöffnungswinkel der Haustür zu berechnen.

Die Überwachungseinrichtung 5 kann dazu ausgelegt sein, den Schließzustand der Haustür anhand eines Unterschreitens eines vorbestimmten Erschütterungsratenschwellwerts für eine vorbestimmte erste Zeitspanne zu ermitteln.

Die Überwachungseinrichtung 5 ist beispielsweise mit der zweiten Erfassungseinrichtung 2 und/oder der Rechnereinrichtung 4 gekoppelt.

Die Überwachungseinrichtung 5 und die Rechnereinrichtung 4 sind beispielsweise als eine Prozessoreinheit oder als eine sonstige elektronische Datenverarbeitungseinheit ausgebildet und sind in Form eines elektronischen Datenverarbeitungsnetzwerkes miteinander gekoppelt.

Die Überwachungseinrichtung 5 und die Rechnereinrichtung 4 sind ferner beispielsweise als ein Mikrocontroller, auch µController, ausgebildet, welcher neben einem Prozessor auch Einheiten für Peripheriefunktionen auf einem Chip vereint.

Die erste Erfassungseinrichtung 1 und die zweite Erfassungseinrichtung 2 können auch abweichend von der in der Figur 2 dargestellten Ausführungsform räumlich nebeneinander angeordnet werden und in einer Sensoreinheit integriert werden.

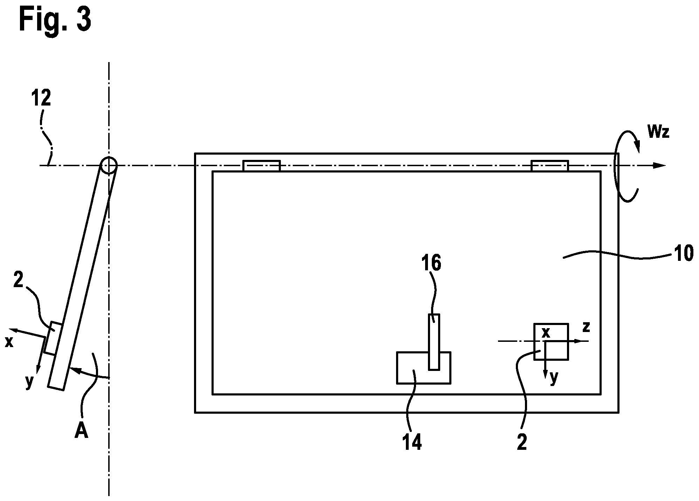

Die Figur 3 zeigt eine schematische Darstellung einer Haustür zur Erläuterung der Erfindung.

Die Haustür 10 weist beispielsweise einen Türbeschlag 14 und einen Türgriff 16 auf, wie im rechten Teilbereich der Figur 3 durch eine Seitenansicht der Haustür 10 dargestellt. Die Haustür 10 ist dabei um eine Schwenkachse 12 der Haustür 10 drehbar gelagert und kann eine Drehrate Wz bei der Drehbewegung aufweisen.

Der Schließzustand der Haustür 10 ist durch den Öffnungswinkel A bestimmt, wie im linken Teilbereich der Figur 3 durch eine Draufsicht auf die Haustür 10 dargestellt.

Die erste Erfassungseinrichtung 1 kann über eine Integration von Beschleunigungsdaten den Öffnungswinkel der Haustür 10 und anhand eines Schwellwertvergleichs die Bewegung der Haustür 10 in den Raumkoordinaten für die x-, y-, und z-Richtung erfassen. Die zweite Erfassungseinrichtung 2 kann zum verbesserten Erfassen der Erschütterungen direkt auf die Haustür angeordnet werden.

Die Erfassung des Öffnungswinkels der Haustür 10 und der Erschütterung der Haustür 10 kann auch nur mittels der zweiten Erfassungseinrichtung 2 erfolgen, sofern die zweite Erfassungseinrichtung 2 einen kombinierten Beschleunigungs- und Drehratensensor aufweist. Ferner können die erste Erfassungseinrichtung 1 und die zweite Erfassungseinrichtung 2 Beschleunigungs- und Drehratensensoren gemeinsam benutzen. Ebenso kann nur die zweite Erfassungseinrichtung 2 direkt an der Haustür 10 angebracht sein.

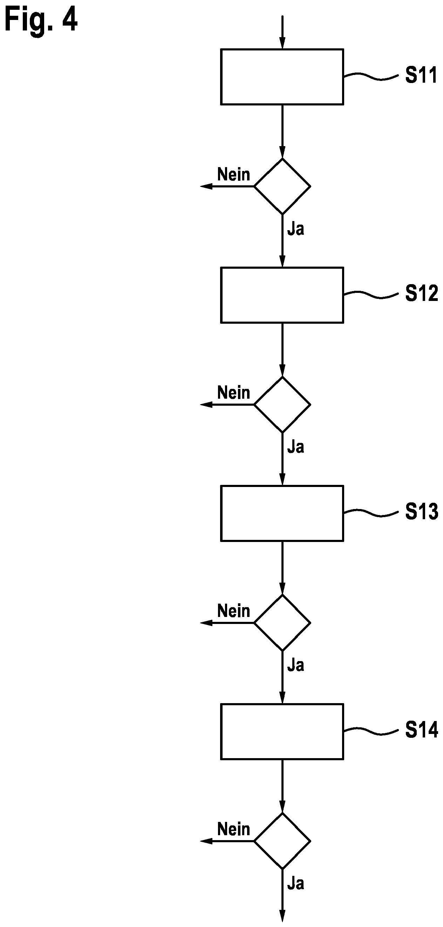

Die Figur 4 zeigt eine schematische Darstellung eines Flussdiagramms eines Verfahrens zum Ermitteln eines Schließzustands einer Haustür oder eines Hausfensters gemäß einer noch weiteren Ausführungsform der Erfindung.

Die Methode zur Detektion des Schließvorgangs bzw. zur Erfassung des geschlossenen Zustands der Haustür 10 oder des Hausfensters 20 gemäß dem in der Figur 3 dargestellten Ausführungsbeispiel beinhaltet folgende Schritte:
Im ersten Schritt S11 wird der der Öffnungswinkel der Haustür 10 oder des Hausfensters 20 berechnet. Abschließend wird geprüft, ob die Haustür 10 oder das Hausfenster 20 gerade geschlossen wird. Falls nein, gilt die Haustür 10 oder das Hausfenster 20 als offen.

Falls ja wird im zweiten Schritt S12 geprüft, ob ein Stoß in Folge eines Zuschlagens der Haustür 10 oder des Hausfensters 20 anhand einer Überprüfung der Sensordaten detektiert wird.

Anschließend wird geprüft, ob ein Stoß der Haustür 10 oder des Hausfensters 20 detektiert wird. Falls nein, gilt die Haustür 10 oder das Hausfenster 20 als offen.

Falls ja, wird im dritten Schritt S13 geprüft, ob die Haustür 10 oder das Hausfenster 20 für eine bestimmte Zeit bewegt wird. Falls ja, gilt die Haustür 10 oder das Hausfenster 20 als offen.

Falls nein, wird in einem vierten Schritt S14 geprüft, ob die Türstellung unterhalb einer vorbestimmten Öffnungsschwelle liegt, d. h. ob der Öffnungswinkel annähernd zu ist.

Falls nein, gilt die Haustür 10 oder das Hausfenster 20 als offen, falls ja, gilt die Haustür 10 oder das Hausfenster 20 als geschlossen.

Die Verfahrensschritte können dabei iterativ oder rekursiv in beliebiger Reihenfolge wiederholt werden.

## Patentansprüche

1. Verfahren zum Ermitteln eines Schließzustands einer Haustür (10) oder eines Hausfensters (20), mit folgenden Verfahrensschritten:
- Erfassen (S1) einer Drehrate der Haustür (10) oder des Hausfensters (20) mit Hilfe von einer ersten Erfassungseinrichtung (1) und Berechnen eines Öffnungswinkels der Haustür (10) oder des Hausfensters (20) anhand der erfassten Drehrate und Ermitteln, ob der berechnete Öffnungswinkel einen vorbestimmten Winkelschwellwert unterschreitet;
- Erfassen (S2) einer Erschütterungsrate der Haustür (10) oder des Hausfensters (20) mit Hilfe von einer zweiten Erfassungseinrichtung (2) und Ermitteln, ob von der erfassten Erschütterungsrate ein vorbestimmter Erschütterungsratenschwellwert innerhalb einer vorbestimmten ersten Zeitspanne überschritten wird; und
- Ermitteln (S3), ob von der erfassten Drehrate ein vorbestimmter Drehratenschwellwert innerhalb einer vorbestimmten zweiten Zeitspanne seit dem Überschreiten des Erschütterungsratenschwellwertes überschritten wird.

2. Verfahren nach Anspruch 1, **dadurch gekennzeichnet, dass** während der ersten und/oder der zweiten Zeitspanne ein fortgesetztes Erfassen der Drehrate der Haustür (10) oder des Hausfensters (20) mit Hilfe von der ersten Erfassungseinrichtung (1) erfolgt und ein Berechnen des Öffnungswinkels der Haustür (10) oder des Hausfensters (20) anhand der erfassten Drehrate und ein Ermitteln erfolgt, ob der berechnete Öffnungswinkel den vorbestimmten Winkelschwellwert unterschreitet.

3. Verfahren nach einem der Ansprüche 1 und 2, **dadurch gekennzeichnet, dass** nach einem Ermitteln eines Schließens der Haustür (10) oder des Hausfensters (20) der Winkelschwellwert kalibriert wird.

4. Verfahren nach einem der Ansprüche 1 bis 3, **dadurch gekennzeichnet, dass** als die vorbestimmte erste Zeitspanne eine Zeitspanne von bis zu 3 s oder von bis zu 1,5 s oder von bis zu 0,1 s verwendet wird.

5. Verfahren nach einem der Ansprüche 1 bis 4, **dadurch gekennzeichnet, dass** als die vorbestimmte zweite Zeitspanne eine Zeitspanne von bis zu 20 s oder von bis zu 10 s oder von bis zu 5 s verwendet wird.

6. Vorrichtung zum Ermitteln eines Schließzustands einer Haustür (10) oder eines Hausfensters (20), mit
einer ersten Erfassungseinrichtung (1), welche dazu ausgelegt ist, eine Drehrate der Haustür (10) oder des Hausfensters (20) zu erfassen, und einer zweiten Erfassungseinrichtung (2), welche dazu ausgelegt ist, eine Erschütterungsrate der Haustür (10) oder des Hausfensters (20) zu erfassen;
einer Rechnereinrichtung (4), welche dazu ausgelegt ist, einen Öffnungswinkel anhand der erfassten Drehrate zu berechnen; und
einer Überwachungseinrichtung (5), welche dazu ausgelegt ist, den Schließzustand der Haustür (10) oder des Hausfensters (20) anhand eines Vergleichens des berechneten Öffnungswinkels mit einem Winkelschwellwert und anhand eines Vergleichens der Erschütterungsrate mit einem Erschütterungsratenschwellwert zu ermitteln.

7. Vorrichtung (1) nach Anspruch 6, **dadurch gekennzeichnet, dass** die erste Erfassungseinrichtung als ein Drehraten-Sensor zum Erfassen von Daten bezüglich einer aktuell vorherrschenden Drehrate der Haustür (10) oder des Hausfensters (20) ausgebildet ist.

8. Vorrichtung (1) nach einem der Ansprüche 6 und 7, **dadurch gekennzeichnet, dass** die zweite Erfassungseinrichtung als ein Erschütterungssensor zum Erfassen von mechanischen Schwingungen der Haustür (10) oder des Hausfensters (20) ausgebildet ist.

9. Vorrichtung (1) nach einem der Ansprüche 6 bis 8, **dadurch gekennzeichnet, dass** die Rechnereinrichtung (4) dazu ausgelegt ist, die erfassten Drehrate zeitlich zu integrieren, um den Öffnungswinkel der Haustür (10) oder des Hausfensters (20) zu berechnen.

10. Vorrichtung (1) nach Anspruch 9, **dadurch gekennzeichnet, dass** die Überwachungseinrichtung (5) dazu ausgelegt ist, den Schließzustand der Haustür (10) oder des Hausfensters (20) anhand eines Unterschreitens eines vorbestimmten Erschütterungsratenschwellwerts für eine vorbestimmte erste Zeitspanne zu ermitteln.

## Claims

1. Method for determining a closing state of a house door (10) or of a house window (20), comprising the following method steps:
- detecting (S1) a rate of rotation of the house door (10) or of the house window (20) with the aid of a first detection device (1) and calculating an opening angle of the house door (10) or of the house window (20) by using the rate of rotation detected, and determining whether the calculated opening angle falls below a predetermined angular threshold value;
- detecting (S2) a rate of vibration of the house door (10) or of the house window (20) with the aid of a second detection device (2), and determining from the rate of vibration detected whether a predetermined rate of vibration threshold value is exceeded within a predetermined first time period; and
- determining (S3) from the detected rate of rotation whether a predetermined rate of rotation threshold value is exceeded within a predetermined second time interval since the rate of vibration threshold value was exceeded.

2. Method according to Claim 1, **characterized in that**, during the first and/or the second time interval, detection of the rate of rotation of the house door (10) or of the house window (20) is carried out continuously with the aid of the first detection device (1), and a calculation of the opening angle of the house door (10) or the house window (20) is carried out by using the rate of rotation detected, and a determination is made as to whether the calculated opening angle falls below the predetermined angular threshold value.

3. Method according to either of Claims 1 and 2, **characterized in that**, following a determination of a closure of the house door (10) or of the house window (20), the angular threshold value is calibrated.

4. Method according to one of Claims 1 to 3, **characterized in that** a time interval of up to 3 seconds or of up to 1.5 seconds or of up to 0.1 second is used as the predetermined first time interval.

5. Method according to one of Claims 1 to 4, **characterized in that** a time interval of up to 20 seconds or of up to 10 seconds or of up to 5 seconds is used as the predetermined second time interval.

6. Device for determining a closing state of a house door (10) or a house window (12), comprising
a first detection device (1), which is designed to detect a rate of rotation of the house door (10) or of the house window (20), and a second detection device (2) which is designed to detect a rate of vibration of the house door (10) or of the house window (20);
a computer device (4), which is designed to calculate an opening angle by using the rate of rotation detected; and
a monitoring device (5), which is designed to determine the closing state of the house door (10) or of the house window (20) by using a comparison of the calculated opening angle with an angle threshold value and by using a comparison of the rate of vibration with a rate of vibration threshold value.

7. Device (1) according to Claim 6, **characterized in that** the first detection device is formed as a rate of rotation sensor for detecting data with respect to a currently prevailing rate of rotation of the house door (10) or of the house window (20).

8. Device (1) according to either of Claims 6 and 7, **characterized in that** the second detection device is formed as a vibration sensor for detecting mechanical vibrations of the house door (10) or the house window (20).

9. Device (1) according to one of Claims 6 to 8, **characterized in that** the computer device (4) is designed to integrate the rate of rotation detected over time in order to calculate the opening angle of the house door (10) or of the house window (20).

10. Device (1) according to Claim 9, **characterized in that** the monitoring device (5) is designed to determine the closing state of the house door (10) or of the house window (20) by using the fact that the rate of vibration has fallen below a

## Revendications

1. Procédé de détermination d'un état de fermeture d'une porte d'entrée (10) ou d'une fenêtre (20), comprenant les étapes de procédé suivantes:
- détecter (S1) un degré de rotation de la porte d'entrée (10) ou de la fenêtre (20) à l'aide d'un premier dispositif de détection (1) et calculer un angle d'ouverture de la porte d'entrée (10) ou de la fenêtre (20) à l'aide du degré de rotation détecté et déterminer si l'angle d'ouverture calculé est inférieur à une valeur de seuil d'angle prédéterminée;
- détecter (S2) un degré de vibration de la porte d'entrée (10) ou de la fenêtre (20) à l'aide d'un deuxième dispositif de détection (2) et déterminer si une valeur de seuil prédéterminée du degré de vibration est dépassée par le degré de vibration détecté à l'intérieur d'un premier intervalle de temps prédéterminé; et
- déterminer (S3) si une valeur de seuil prédéterminée du degré de rotation est dépassée par le degré de rotation détecté à l'intérieur d'un intervalle de temps prédéterminé depuis le dépassement de la valeur de seuil du degré de vibration.

2. Procédé selon la revendication 1, **caractérisé en ce que** pendant le premier et/ou le deuxième intervalle de temps on effectue une détection prolongée du degré de rotation de la porte d'entrée (10) ou de la fenêtre (20) à l'aide du premier dispositif de détection (1) et on effectue un calcul de l'angle d'ouverture de la porte d'entrée (10) ou de la fenêtre (20) à l'aide du degré de rotation détecté, et on détermine si l'angle d'ouverture calculé est inférieur à la valeur de seuil d'angle prédéterminée.

3. Procédé selon une des revendications 1 et 2, **caractérisé en ce que** l'on calibre la valeur de seuil d'angle après une détermination d'une fermeture de la porte d'entrée (10) ou de la fenêtre (20).

4. Procédé selon l'une quelconque des revendications 1 à 3, **caractérisé en ce que** l'on utilise comme premier intervalle de temps prédéterminé un intervalle de temps de jusqu'à 3 s ou jusqu'à 1,5 s ou jusqu'à 0,1 s.

5. Procédé selon l'une quelconque des revendications 1 à 4, **caractérisé en ce que** l'on utilise comme deuxième intervalle de temps prédéterminé un intervalle de temps de jusqu'à 20 s ou jusqu'à 10 s ou jusqu'à 5 s.

6. Dispositif de détermination d'un état de fermeture d'une porte d'entrée (10) ou d'une fenêtre (20), avec
- un premier dispositif de détection (1), qui est conçu pour détecter un degré de rotation de la porte d'entrée (10) ou de la fenêtre (20), et un deuxième dispositif de détection (2), qui est conçu pour détecter un degré de vibration de la porte d'entrée (10) ou de la fenêtre (20);
- un dispositif de calcul (4) qui est conçu pour calculer un angle d'ouverture à l'aide du degré de rotation détecté; et
- un dispositif de surveillance (5), qui est conçu pour déterminer l'état de fermeture de la porte d'entrée (10) ou de la fenêtre (20) à l'aide d'une comparaison de l'angle d'ouverture calculé avec une valeur de seuil d'angle et à l'aide d'une comparaison du degré de vibration avec une valeur de seuil du degré de vibration.

7. Dispositif (1) selon la revendication 6, **caractérisé en ce que** le premier dispositif de détection est formé par un capteur de degré de rotation pour détecter des données concernant un degré de rotation prévalant actuellement de la porte d'entrée (10) ou de la fenêtre (20).

8. Dispositif (1) selon une des revendications 6 ou 7, **caractérisé en ce que** le deuxième dispositif de détection est formé par un capteur de vibration pour détecter des vibrations mécaniques de la porte d'entrée (10) ou de la fenêtre (20).

9. Dispositif (1) selon l'une quelconque des revendications 6 à 8, **caractérisé en ce que** le dispositif de calcul (4) est conçu pour intégrer par rapport au temps les degrés de rotation détectés, afin de calculer l'angle d'ouverture de la porte d'entrée (10) ou de la fenêtre (20).

10. Dispositif (1) selon la revendication 9, **caractérisé en ce que** le dispositif de surveillance (5) est conçu pour déterminer l'état de fermeture de la porte d'entrée (10) ou de la fenêtre (20) à l'aide d'un franchissement à la baisse d'une valeur de seuil prédéterminée du degré de vibration pendant un premier intervalle de temps prédéterminé.
